Europäisches Patentamt

European Patent Office

Office européen des brevets

(19)

(11) **EP 1 335 348 A1**

(12) **DEMANDE DE BREVET EUROPEEN**

(43) Date de publication:
**13.08.2003 Bulletin 2003/33**

(51) Int Cl.⁷: **G09G 3/36**, G02F 1/139

(21) Numéro de dépôt: 03290272.8

(22) Date de dépôt: **04.02.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **06.02.2002 FR 0201448**

(71) Demandeur: **Nemoptic**
**78114 Magny-Les-Hameaux (FR)**

(72) Inventeurs:
• **Angele, Jacques**
**92240 Malakoff (FR)**
• **Vercelletto, Romain**
**78660 Ably (FR)**
• **Elbhar, Thierry**
**78660 Ably (FR)**

(74) Mandataire: **Texier, Christian et al**
**Cabinet Régimbeau**
**20, rue de Chazelles**
**75847 Paris cedex 17 (FR)**

(54) **Procédé et dispositif d'adressage d'un écran cristal liquide bistable**

(57) La présente invention concerne un procédé d'adressage d'un écran matériel cristal liquide bistable, caractérisé par le fait qu'il comprend au moins l'étape consistant à appliquer, sur les électrodes de colonne de l'écran, un signal électrique dont les paramètres sont adaptés pour diminuer la tension quadratique moyenne des impulsions colonnes parasites, afin de réduire les effets optiques parasites de l'adressage.

Variante 2 de l'invention

Exemple 1

Diminution du temps d'application du signal colonne et modification
de sa forme de façon à diminuer se surface par rapport au créneau
Signal colonne en forme de rampe

Figure 12

**Description**

**DOMAINE DE L'INVENTION**

La présente invention concerne le domaine des dispositifs d'affichage à cristal liquide et plus précisément un procédé et un dispositif de commande de la commutation entre deux états d'un afficheur nématique bistable multiplexé.

**BUT DE L'INVENTION**

Le but de l'invention est d'optimiser les signaux électroniques d'adressage ligne et colonne d'un afficheur bistable multiplexé afin de supprimer la perturbation visuelle d'une image déjà mémorisée, lors de l'adressage de l'écran pour afficher une nouvelle image .

**ETAT DE LA TECHNIQUE**

Selon la nature physique du cristal liquide utilisé, on distingue les dispositifs nématiques, cholestériques, smectiques, ferroélectriques, etc. Dans les afficheurs nématiques, qui font l'objet de la présente invention, on utilise un nématique, achiral ou chiralisé par exemple en ajoutant un dopant chiral. On obtient de cette façon une texture spontanée uniforme ou faiblement tordue, dont le pas de l'hélice est supérieur à quelques micromètres. L'orientation et l'ancrage du cristal liquide à proximité des surfaces sont définis par des couches ou des traitements d'alignement appliqués sur les substrats. En absence de champ on impose de cette façon une texture nématique uniforme ou faiblement tordue.

La plupart des dispositifs proposés et réalisés à ce jour sont monostables. En absence de champ, une seule texture est réalisée dans le dispositif ; elle correspond à un minimum absolu de l'énergie totale de la cellule. Sous champ, cette texture est déformée continûment et ses propriétés optiques varient en fonction de la tension appliquée. A la coupure du champ, le nématique revient à nouveau dans la seule texture monostable. L'homme de l'art reconnaîtra parmi ces systèmes les modes de fonctionnement les plus répandus des afficheurs nématiques : nématiques tordus (TN), supertordus (STN), à biréfringence électriquement contrôlée (ECB), nématiques verticalement alignés (VAN), etc.

Une autre classe d'afficheurs nématiques est celle des nématiques bistables, multistables ou métastables. Dans ce cas, au moins deux textures distinctes peuvent être réalisées dans la cellule, avec les même ancrages sur les surfaces et stables ou métastables en absence de champ. La commutation entre les deux états est réalisée par l'application de signaux électriques appropriés. Une fois l'image inscrite, elle reste mémorisée en absence du champ grâce à la bistabilité. Cette mémoire des afficheurs bistables est très attractive pour de nombreuses applications. D'un côté, elle permet un faible taux de rafraîchissement des images, très favorable pour diminuer la consommation des appareils portables. D'autre part, pour des applications rapides (par exemple vidéo) la mémoire assure un très fort taux de multiplexage, permettant un affichage vidéo de haute résolution.

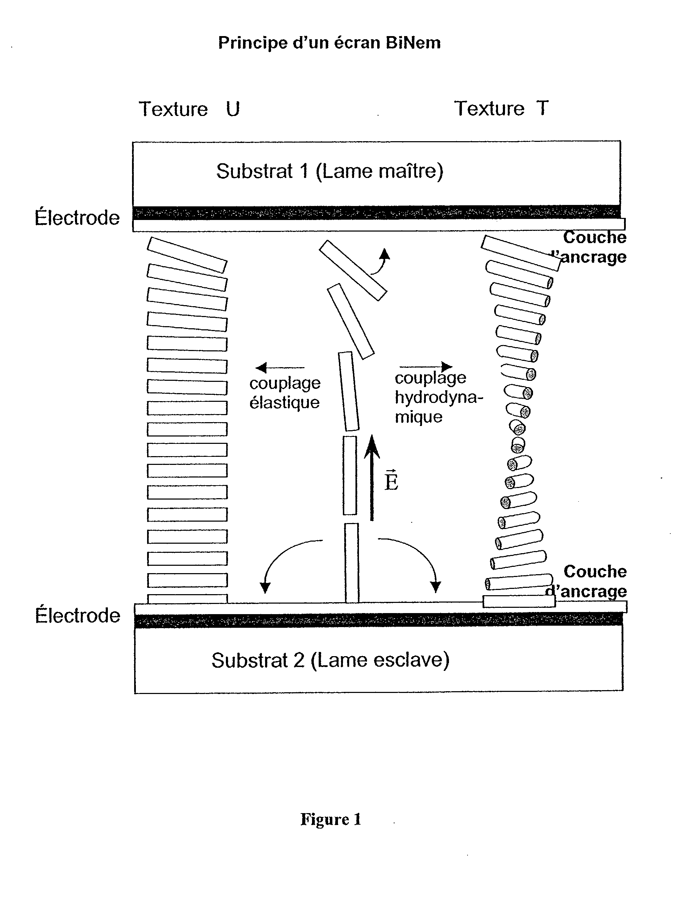

**Description de l'écran bistable dénommé BiNem (figure 1)**

Récemment, un nouvel afficheur bistable (document [1]) a été proposé.

Il est constitué d'une couche de cristal liquide nématique chiralisé ou d'un cholestérique entre deux lames ou substrats dont l'un au moins est transparent. Deux électrodes disposées respectivement sur les substrats permettent d'appliquer des signaux électriques de commande sur le cristal liquide nématique chiralisé situé entre elles. Sur les électrodes des couches d'ancrage orientent les molécules du cristal liquide dans les directions voulues. Sur une lame maître l'ancrage des molécules est fort et légèrement incliné, sur la lame esclave il est faible et à plat. L'ancrage des molécules sur ces surfaces est monostable.

Un système optique complète le dispositif.

Au niveau de la couche de cristal liquide, deux textures, U (uniforme ou faiblement tordue) et T sont stables sans champ appliqué. La texture uniforme peut être légèrement tordue pour favoriser l'optique du dispositif. Ceci est obtenu par un angle entre la direction d'ancrage sur la lame maître et sur la lame esclave. Les deux textures diffèrent de $\pm180°$ et sont topologiquement incompatibles. Le pas spontané $p_0$ du nématique est choisi proche de 4 fois l'épaisseur $d$ de la cellule ($p_0 \cong 4.d$) pour rendre les énergies de U et T essentiellement égales. Sans champ il n'existe aucun autre état avec une énergie plus basse : U et T présentent une vraie bistabilité.

**Passage d'une texture à l'autre par cassure d'ancrage**

Principe physique

Les deux textures bistables sont topologiquement distinctes, il est impossible de les transformer l'une dans l'autre par une distorsion continue en volume. La transformation d'une texture U en une texture T ou vice-versa nécessite donc soit la rupture de l'ancrage sur les surfaces, induite par un fort champ externe, soit le déplacement d'une ligne de désinclinaison. Ce second phénomène, nettement plus lent que le premier, peut-être négligé et ne sera pas détaillé dans la suite.

Toute couche d'alignement d'un cristal liquide peut être caractérisée par une énergie d'ancrage zénithale Az. Cette énergie est toujours finie. On montre qu'il existe alors un champ seuil $E_c$ également fini (seuil de cassure de l'ancrage), qui donne à la surface, quelle que soit la texture précédente sans champ, une texture homéotrope (H).

La cassure de l'ancrage nécessite l'application d'un champ au moins égal au champ seuil $E_C$. Ce champ doit être appliqué suffisamment longtemps pour que la réorientation du cristal liquide au voisinage de la surface aboutisse à la texture homéotrope. Ce temps minimal dépend de l'amplitude du champ appliqué, mais aussi des caractéristiques physiques du cristal liquide et de la couche d'alignement. Dans le cas statique (champs appliqués pendant quelques millisecondes ou plus),

$$E_c \cong \frac{A_Z}{\sqrt{K_{33}\varepsilon_0\Delta\varepsilon}},$$

où Az est l'énergie d'ancrage zénithale de la surface, $K_{33}$ le coefficient élastique de flexion du cristal liquide, $\Delta\varepsilon$ son anisotropie diélectrique relative et $\varepsilon_0$ la constante diélectrique du vide.

On définit Vc, tension de cassure d'ancrage telle que : Vc = $E_c$.d avec d épaisseur de la cellule de cristal liquide.

L'ancrage est dit cassé lorsque les molécules sont normales à la lame au voisinage de cette surface, et que le couple de rappel exercé par la surface sur ces molécules est nul. En pratique, il suffit que l'écart entre l'orientation des molécules et la normale à la surface soit suffisamment petit, par exemple inférieur à 0,5°, et que le couple qui s'applique sur les molécules à la surface soit assez faible. Quand ces conditions sont réunies, les molécules nématiques à proximité de la surface cassée se trouvent en équilibre instable lorsque le champ électrique est coupé, et peuvent soit revenir à leur orientation initiale, soit tourner en sens inverse et induire une nouvelle texture différant de la texture initiale d'une torsion de 180°.

Le contrôle de la texture finale dépend de la forme du signal électrique appliqué, en particulier de la manière dont ce champ est ramené à zéro.

Une descente progressive de la tension de l'impulsion minimise l'écoulement, les molécules près de la lame maître descendent lentement vers leur état d'équilibre, leur couplage élastique avec les molécules du centre de l'échantillon les fait s'incliner aussi dans la même direction, ce mouvement diffuse jusqu'à la lame esclave où les molécules s'inclinent à leur tour rapidement dans la même direction, aidées par le couple de surface. L'état uniforme U se construit ensuite progressivement au centre de la cellule.

Lorsque le champ décroît brusquement, l'orientation du cristal liquide est modifiée, d'abord au voisinage de la surface forte (lame maître), avec un temps de relaxation de surface égal à $\frac{\gamma_1 L^2}{K}$, où L = $\frac{K_{33}}{Az}$ est la longueur d'extrapolation de la couche forte et $\gamma_1$ la viscosité de rotation du cristal liquide. Ce temps est typiquement de l'ordre d'une dizaine de microseconde.

La commutation de la surface forte en un temps aussi court induit un fort écoulement près de cette surface, qui diffuse dans le volume et atteint la surface faible (lame esclave) après un temps i caractéristique inférieur à la microseconde. Le cisaillement induit sur la surface faible (lame esclave) crée un couple hydrodynamique sur les molécules de cette surface. Ce couple est en sens inverse du couple élastique induit par l'inclinaison de la lame maître. Lorsque le cisaillement est suffisamment important, le couple hydrodynamique sur la surface faible est le plus fort, il promeut la texture tordue T. Lorsque le cisaillement est plus faible, le couple élastique sur la surface faible est le plus fort, il induit la texture uniforme U.

Le sens de rotation des molécules dans la cellule est indiqué par une flèche sur la figure 1.

Le volume se ré-oriente ensuite, avec un temps caractéristique de relaxation de volume $\tau_{vol}$ égal à $\frac{\gamma_1 d^2}{K}$, où d est l'épaisseur de la cellule. Ce temps est bien supérieur au temps de relaxation de la surface forte, typiquement de l'ordre d'une milliseconde.

Mise en oeuvre pratique

Compte tenu de l'effet expliqué précédemment, c'est la forme de la descente de l'impulsion électrique appliquée aux bornes de chaque pixel qui conditionne le passage d'une texture à l'autre.

Nous appelons arbitrairement "inscription" le passage à la texture tordue T et "effacement" le passage à la texture uniforme U.

Pour obtenir l'inscription sur un pixel donc le passage à la texture T, il faut

(1) lui appliquer une impulsion fournissant un champ supérieur au champ de cassure de l'ancrage sur la lame esclave et attendre le temps nécessaire au lever des molécules dans le pixel. Le champ de cassure est fonction des propriétés élastiques et électriques du matériau cristal liquide et de son interaction avec la couche d'ancrage déposée sur la lame esclave de la cellule. Il est de l'ordre de quelques volts à la dizaine de volt par micron. Le temps de lever des molécules est proportionnel à la viscosité rotationnelle $\gamma$ et inversement proportionnel à l'anisotropie diélectrique du matériau utilisé ainsi qu'au carré du champ appliqué. Pratiquement, ce temps peut descendre vers quelques microsecondes pour des champs de 20 volts par micron.

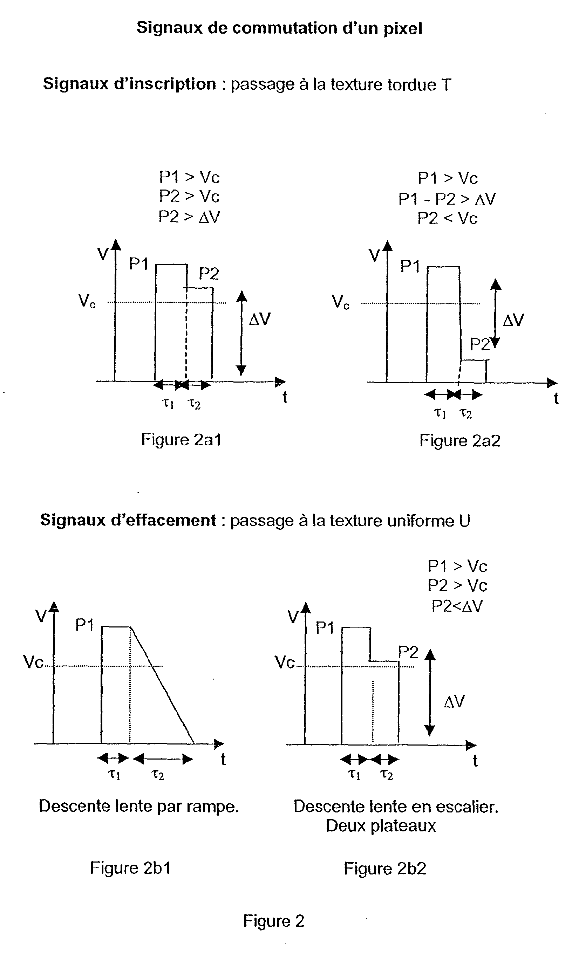

(2) Il suffit ensuite de réduire le champ rapidement, en créant en quelques microsecondes ou au plus en quelques dizaines de microsecondes une chute brusque de la tension de commande. Cette chute brusque de tension, d'amplitude $\Delta V$, est telle qu'elle est capable d'induire, dans le cristal liquide, un effet hydrodynamique suffisamment intense. Pour produire la texture T, cette chute doit impérativement faire passer la tension appliquée d'une valeur supérieure à la tension de cassure d'ancrage $V_c$ à une valeur inférieure à celle-ci. Le temps de descente du champ appliqué est inférieur au dixième de sa durée ou à 50 micro seconde dans le cas d'impulsions longues. Les figures 2a1 et 2ab donnent deux exemples de réalisation d'une impulsion induisant la texture T.

Selon la figure 2a1, l'impulsion comprend une première séquence de durée $\tau_1$ d'amplitude P1 telle que P1 > $V_c$ suivie d'une seconde séquence de durée $\tau_2$ et d'amplitude P2 légèrement inférieure à P1 telle que P2 > $V_c$ et P2 > $\Delta V$, laquelle seconde séquence passe brusquement à zéro. Selon la figure 2a2, l'impulsion comprend une première séquence de durée $\tau_1$ d'amplitude P1> $V_c$ suivie d'une seconde séquence de durée $\tau_2$ et d'amplitude P2 telle que P2 < Vc et: P1 - P2 > $\Delta V$.

Pour l'effacement, il faut :

(1) aussi lever les molécules

(2) puis réaliser une « descente lente ». Le document [1] propose deux réalisations de cette « descente lente ». schématisées par les figures 2b1 et 2b2 : le signal d'effacement est soit une impulsion de durée $\tau_1$ et d'amplitude P1 suivie d'une rampe de durée $\tau_2$ dont le temps de descente est supérieur à trois fois la durée de l'impulsion (figure 2b1), soit une descente en escalier, sous forme d'un signal à deux plateaux (première séquence de durée $\tau_1$ et d'amplitude P1, suivie d'une seconde séquence de durée $\tau_2$ et d'amplitude P2 telle que soit P2 > Vc et P2<$\Delta V$, soit P2 <Vc et P1 - P2 < $\Delta V$. La descente en escalier de deux paliers étant plus facilement réalisable avec les moyens de l'électronique digitale, la pente ne sera pas envisagée ici. On peut cependant bien entendu imaginer une descente en un nombre de plateaux supérieur à deux.

Les formes d'impulsions caractéristiques du passage à l'une ou l'autre des textures sont données figure 2 (cf document [1] et document [2]). Les durées et les valeurs des tensions des paliers (P1, $\tau_1$) et (P2, $\tau_2$) ont été déterminées expérimentalement dans les exemples donnés ci dessous.

## Principe du multiplexage classique

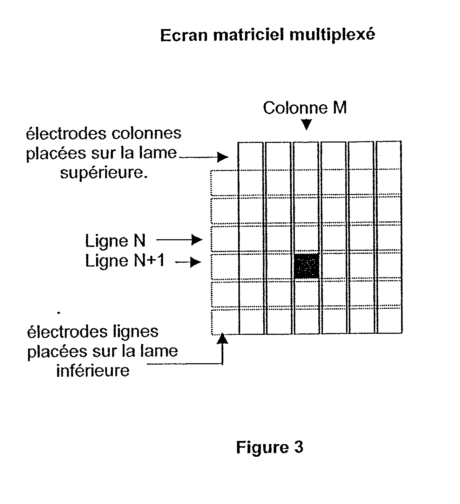

Dans le cas d'un écran matriciel de moyenne résolution, l'homme de l'art sait qu'il est hors de question de relier individuellement chaque pixel à une électrode de commande indépendante, car cela nécessiterait une connexion par pixel, ce qui est impossible topologiquement dès que l'écran devient complexe. Il est possible d'économiser des connexions en recourant à la technique du multiplexage lorsque l'effet électro-optique utilisé est non linéaire, ce qui est le cas des technologies à cristaux liquides usuelles. Les pixels sont rassemblés par un système matriciel en n groupes de m pixels chacun. Ce sont par exemple n lignes et m colonnes pour les écrans matriciels ou n chiffres et m parties de chiffre pour les afficheurs numériques. Dans le mode d'adressage séquentiel, qui est le plus utilisé, une seule ligne est sélectionnée à la fois, puis on passe à la ligne suivante et ainsi de suite jusqu'à la dernière ligne. Durant le temps de sélection d'une ligne, les signaux colonnes sont appliqués au même instant à tous les pixels de la ligne. Cette méthode permet d'adresser une image dans un temps total égal au temps d'adressage d'une ligne multiplié par le nombre de lignes n. Avec cette méthode, il suffit de m + n connexions pour adresser un écran de m x n pixels, où m est le nombre de colonnes de la matrice considérée. Un écran matriciel multiplexé est illustré sur la figure 3.

Le signal électrique vu par le pixel est la différence entre le signal appliqué à la ligne et le signal appliqué à la colonne dont le pixel est l'intersection.

Ce principe d'écran dessiné sur la figure 2 est dit "écran passif". Il ne comporte pas d'éléments actifs permettant d'isoler les pixels. Une électrode ligne est commune à tous les pixels de cette ligne et une électrode colonne est commune à tous les pixels de cette colonne, sans élément actif (transistor par exemple). Les écrans passifs sont de ce fait bien plus simples à fabriquer que les écrans actifs comportant un transistor ou une diode de commande par pixel.

L'inconvénient du multiplexage passif est qu'un pixel est sensible aux signaux colonnes pendant tout le temps d'adressage de l'image, et non pas seulement pendant la durée d'activation de sa ligne. C'est à dire qu'un pixel de l'écran reçoit, pendant le temps d'inscription de l'image, successivement les signaux colonne de toute sa colonne. On peut considérer les signaux appliqués au pixel en dehors du temps de sélection de sa ligne comme des signaux parasites, qui interviennent dans la réponse électro-optique du pixel de cristal liquide. Plus précisément, pour les matrices passives de type TN, STN ou une de leur variante, l'état du cristal liquide dans un pixel ne dépend presque exclusivement que de la valeur quadratique moyenne de la tension qui lui est appliquée pendant le temps d'adressage de l'image , dans les conditions usuelles de fonctionnement. Donc l'état final des molécules de cristal liquide, soit in fine la transmission optique du pixel, est déterminé par la valeur rms de la tension appliquée pendant le temps d'adressage de l'image. La conséquence est une limitation du nombre de lignes de l'écran exprimée par le critère de Alt et Plesko (document [3]).

**Principe du multiplexage appliqué au BiNem**

Les écrans considérés en BiNem sont également formés de n x m pixels (figure 3), réalisés à l'intersection de bandes conductrices perpendiculaires déposées sur les deux substrats déjà indiqués. Le pixel de la ligne N+1, colonne M y est représenté noir. Le dispositif est complété par les connexions et les circuits électroniques placés sur le substrat ou sur des cartes auxiliaires.

Les signaux d'inscription et d'effacement appliqués sur les pixels sont réalisés par la combinaison de signaux ligne et colonne. Ils permettent d'inscrire et d'effacer ligne par ligne, donc rapidement, les écrans considérés

Il faut appliquer aux lignes et colonnes des signaux tels que la tension résultante aux bornes du pixel soit du type décrit figure 2 : la tension appliquée au pixel pendant le temps d'écriture ligne doit être égale à une impulsion qui, à la demande, soit s'arrête brusquement en provoquant une chute de tension supérieure ou égale $\Delta V$ et crée la texture tordue T (état optiquement noir, habituellement), soit descend progressivement par plateaux et crée la texture uniforme U (état optiquement brillant habituellement).

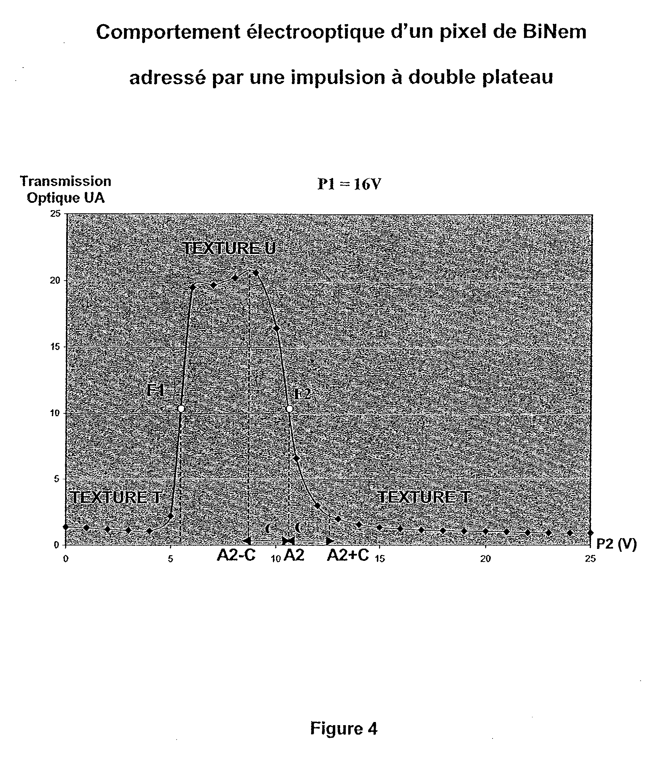

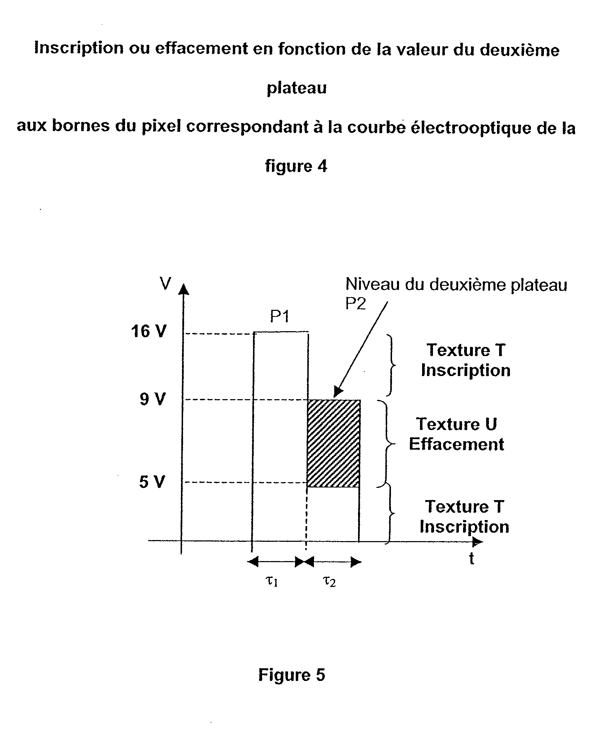

La possibilité d'effectuer le passage entre les textures T et U et réciproquement, par multiplexage, est démontrée par la courbe électrooptique donnée figure 4 : le pixel de Binem est adressé avec une impulsion à double plateau de valeur P1 fixé et P2 variable. La transmission optique est donnée en fonction de la valeur du second plateau P2 avec P1 = 16 V. Les temps d'impulsion sont de 0,8 ms. Compte tenu de l'orientation des polariseurs dans cet exemple, un minimum de transmission correspond à l'état T et un maximum à l'état U.

Zones d'inscription

Pour des tensions P2 plus élevées que environ 11 Volts, la chute de tension à la fin du palier 2 est suffisante pour inscrire. Pour les tensions P2 plus faibles que 5 Volts, la chute de tension à la fin du temps $\tau_1$ a inscrit, la tension du palier 2 est inférieure à Vc, la chute de tension à sa fin ne peut plus provoquer la commutation de la texture.

La valeur de la chute de tension $\Delta V$ nécessaire à l'inscription est égale à environ 6 Volts et la tension de cassure Vc à environ 5 Volts.

Zone d'effacement

On peut lire sur la courbe de la figure 4 que l'effacement se produit pour une tension P2E comprise entre 6 et 9 Volts. Dans ce domaine de tension, à la fin du temps $\tau_1$, les molécules près de la lame esclave sont entraînées par l'écoulement, donc dans la direction de l'inscription. Pendant le palier 2, légèrement supérieur à la tension de cassure, elles reviennent presque verticales mais faiblement inclinées dans le sens de l'effacement à cause du couplage élastique avec la lame maître. A la fin du temps $\tau_2$, la chute de tension, inférieure à $\Delta V$, est trop faible pour que le deuxième écoulement redresse les molécules, les fasse tomber dans sa direction et donc inscrive. La "descente lente" est ainsi réalisée en deux étapes.

Les valeurs du deuxième plateau correspondant à l'une ou l'autre des textures sont illustrées figure 5.

Multiplexage du BiNem selon l'état de l'art antérieur

On définit F1 et F2 comme les 2 points de fonctionnement situés au point d'inflexion de la montée ou de la descente de la courbe de transmission optique de la figure 4. Considérons F2 à titre d'exemple. La tension correspondant au point F2, égale à 11 V, peut correspondre à la valeur du deuxième plateau A2 du signal ligne. La valeur de la tension colonne C = 2 V correspond à l'intervalle de tension nécessaire pour obtenir la tension pixel correspondant soit à la texture T (transmission minimum), soit à la texture U (transmission maximum). La valeur du deuxième plateau appliqué au pixel est alors soit P2I = A2+C pour l'inscription (texture U) soit P2E = A2-C pour l'effacement avec :

pour le signal ligne : A1 = 16 V A2 = 10 V
pour le signal colonne : C = 2V
pour le signal aux bornes du pixel : P1= 16 V P2E=8 V P2I = 12 V.

Ces valeurs varient selon les propriétés du cristal liquide et de la couche d'alignement, et peuvent facilement être ajustées pour d'autres écrans réalisés selon le même principe avec des matériaux différents. Un exemple de réalisation est donné dans le document [4].

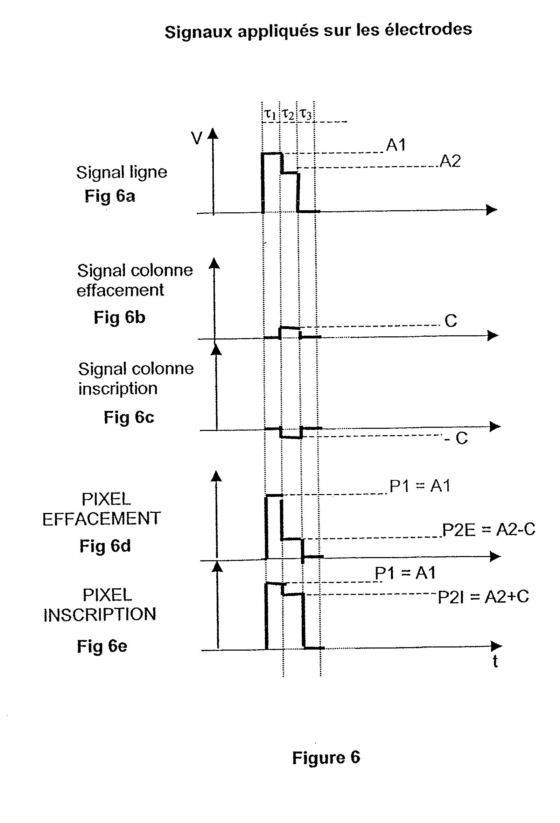

La figure 6 montre le principe de signaux ligne et colonne réalisant l'inscription et l'effacement, quand le choix s'est porté sur le point de fonctionnement F2 défini précédemment. Le signal ligne (figure 6a) comporte deux plateaux : le premier fournit la tension A1 pendant $\tau_1$, le deuxième A2 pendant $\tau_2$. Le signal colonne (figures 6b et 6c) d'amplitude C est appliqué uniquement pendant le temps $\tau_2$, en positif ou en négatif selon que l'on veut effacer ou inscrire. Le temps $\tau_3$ sépare deux impulsions ligne. Les figures 6d et 6e illustrent les signaux appliqués respectivement aux bornes d'un pixel effacé et aux bornes d'un pixel inscrit. Ces signaux sont très simples et permettent un ajustement facile de tous leurs paramètres aux caractéristiques de l'écran.

**VARIANTES DE MULTIPLEXAGE - OBTENTION D'UNE VALEUR MOYENNE NULLE**

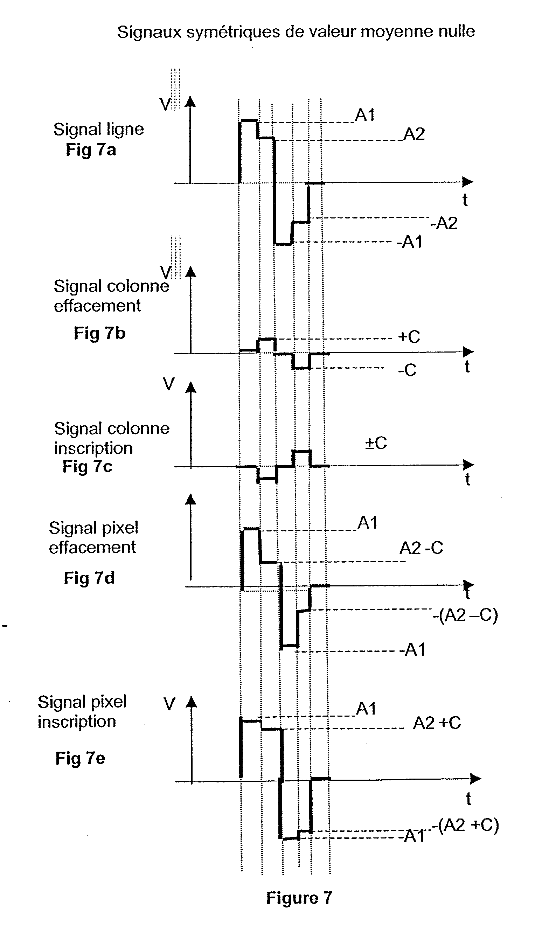

Pour tenir compte des problèmes de dégradation par électrolyse de certains matériaux cristal liquide lorsqu'il sont soumis à une tension continue, il est souvent utile d'appliquer sur les pixels des signaux de valeur moyenne nulle. Les figures 7, 8 et 9 présentent les techniques permettant de transformer les signaux de principe de la figure 6 en signaux symétriques de valeur moyenne nulle.

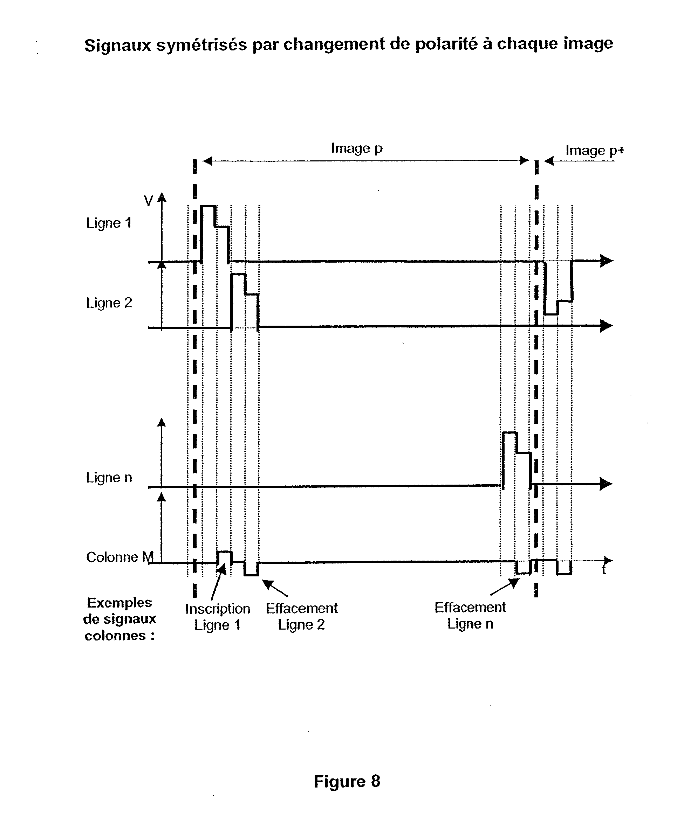

Sur la figure 7 deux signaux identiques de polarité opposées qui se suivent, forment le signal de sélection ligne. Les figures 7a, 7b, 7c, 7d et 7e représentent respectivement des signaux ligne, des signaux colonne d'effacement des signaux colonne d'inscription, des signaux d'effacement aux bornes d'un pixel et des signaux d'inscription aux bornes d'un pixel. Une autre technique de symétrisation est proposée sur la figure 8. Les signaux sont les mêmes que sur la figure 6. Cependant, leurs signes s'inversent à chaque changement d'image.

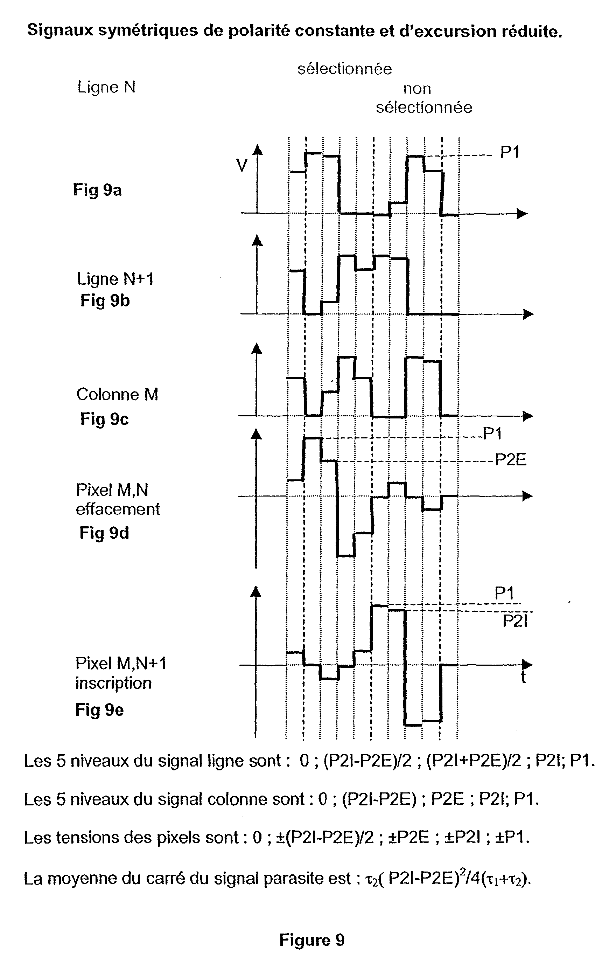

Le driver du signal ligne doit dans les cas précédents et du fait de la symétrisation délivrer une tension de +/- A1 soit une excursion totale de 2.A1. Une simplification notable des drivers peut être obtenue si l'on réduit l'excursion maximale à une valeur inférieure à 2.A1. Pour cela, il suffit de changer de manière synchrone le point milieu de fonctionnement $V_M$ du signal ligne et du signal colonne correspondant lors de la deuxième polarité. Il s'agit donc, si on part du cas de la figure 7, d'ajouter une tension commune $V_M$ à l'ensemble des signaux ligne et colonne lors de la phase de symétrisation. La figure 9 donne l'exemple d'un signal $V_M$ = 0 lors de la première polarité et $V_M$ différent de 0 lors de la deuxième polarité. Ce principe est applicable avec $V_M$, différent de zéro lors de la première polarité puis $V_M$ différent de zéro lors de la deuxième polarité. L'important est que la tension aux bornes du pixel reste inchangée, tel que décrit sur la figure 7. Là encore, les figures 9a, 9b, 9c, 9d et 9e présentent respectivement des signaux ligne, des signaux colonne d'effacement, des signaux colonnes d'inscription, des signaux d'effacement aux bornes d'un pixel et des signaux d'inscription aux bornes d'un pixel.

**Limitation de la méthode classique de multiplexage du BiNem**

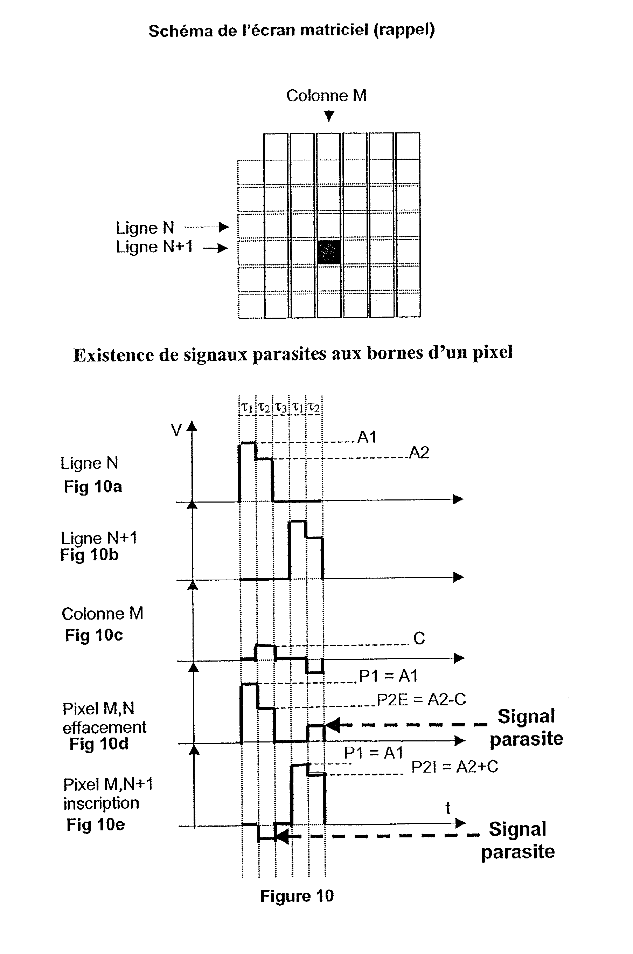

La méthode classique de multiplexage du Binem peut limiter les performances optiques des images affichées. En effet, le signal pixel est constitué de deux contributions : le signal résultant des signaux ligne et colonne durant la période de sélection de sa ligne, plus des signaux parasites qui correspondent aux signaux colonnes appliqués sur le pixel en dehors de la période de sélection de sa ligne. La figure 10 montre l'existence de ces signaux parasites.

Les figures 10a, 10b, 10c, 10d et 10e représentent respectivement des signaux ligne, des signaux colonne d'effacement, des signaux colonne d'inscription, des signaux d'effacement aux bornes d'un pixel et des signaux d'inscription aux bornes d'un pixel. La figure 10f schématise un écran matriciel.

En pratique, l'amplitude des signaux de colonnes est bien inférieure au seuil de cassure de l'ancrage. Les signaux parasites ne peuvent en aucun cas provoquer la commutation des textures. Néanmoins, ils provoquent des perturbations temporaires de la réponse optique des pixels en déformant la texture du pixel sans casser ni l'ancrage faible ni l'ancrage fort. L'apparence optique peut être sévèrement perturbée durant la durée totale d'adressage de l'écran. Cela se traduit par exemple par un scintillement, une perte de contraste de l'image, etc. Après l'inscription de toute l'image, les tensions parasites ont disparu, les pixels reprennent leur texture initiale et stable, jusqu'à un prochain cycle d'adressage.

Si le temps total d'adressage de l'image est court, le scintillement de l'image et relativement peu perceptible à l'observateur.

Cependant pour des écrans importants où le temps d'écriture de l'image augmente, il est utile de supprimer ces perturbations temporaires. Il est souhaitable qu'une image remplace l'autre progressivement ligne par ligne sans perturbation des autres lignes. Pour cela, il faut que la tension quadratique moyenne des signaux parasites Vrms soit inférieure à la tension de seuil de Fréederickzs $V_F$, car alors l'élasticité du cristal liquide est suffisante pour lutter contre le champ perturbateur. Ainsi , pour éviter les perturbations pendant le changement d'image il faut :

$$Vrms < V_F \qquad (1)$$

Soit

$$[\tau_2 / (\tau_1 + \tau_2 + \tau_3).] \, C^2 < V^2_F. \qquad (2)$$

La formule précédente prend en compte comme temps d'intégration la durée $\tau_1 + \tau_2 + \tau_3$ égale au temps entre deux signaux colonne successifs. Cette hypothèse de calcul n'est correcte que si :

$$\tau_1 + \tau_2 + \tau_3 < \tau_{CL} \qquad (3)$$

avec $\tau_{CL}$ temps de réponse caractéristique du cristal liquide pour des impulsions colonne d'amplitude C. En effet si le temps entre deux signaux colonne successifs est supérieur au temps de réponse du cristal liquide, alors le temps d'intégration à prendre en compte est le plus court, soit égal au temps de réponse du cristal liquide. Le critère à respecter est dans ce cas plus sévère . On cherchera donc à se placer à $\tau_1 + \tau_2 + \tau_3 < \tau_{CL}$.

Pour respecter l'équation (2), une première méthode est de minimiser C. La limite inférieure de C est imposée par la courbe de réponse électro-optique présentée figure 4. Une valeur trop faible de C ne permettrait pas en effet de réaliser la commutation entre les deux textures.

Quand la minimisation de C n'est pas suffisante pour que la condition (2) soit réalisée, il faut réduire le rapport $\tau_2 / (\tau_1 + \tau_2 + \tau_3)$.

Par exemple, il est possible de prévoir un temps supplémentaire $\tau_3$ placé entre les impulsions des différentes lignes pour diminuer encore la valeur quadratique moyenne des tensions parasites. Cette méthode augmente malheureusement le temps d'inscription des images. De plus, si l'inégalité (3) n'est plus respectée, cette option n'est pas efficace.

Nous donnons ici un calcul numérique à titre d'exemple :

Pour les matériaux cristaux liquides utilisés dans ces dispositifs, la tension de Fréederickzs VF varie de 0,65 à 1,5 volts. Prenons le cas le plus défavorable de 0,65 V

Avec $\tau_1 = \tau_2 = 500 \ \mu s$ et $\tau_3 = 0$ et un signal C=2 V on a :
Vrms2 = $\tau_2 / (\tau_1 + \tau_2)$ . $C^2 = C^2 / 2 = 2V^2$
Vrms = 1,4 V > 0,65 V

Le critère (1) n'est pas respecté.

Le temps de réponse caractéristique du cristal liquide est donné par la formule :

$$\tau_{CL} = (\gamma.d^2 / K. \, \pi^2) / [(V/V_F)^2 -1]$$

avec $\gamma$ viscosité rotationnelle et K constante élastique du cristal liquide. Typiquement $\gamma$ = 80. $10^{-3}$ Pa .s et K = 7.$10^{-12}$ N. d épaisseur de la cellule, typiquement 1,5 $\mu m$ et V tension colonne C typiquement 2 V.

On calcule $\tau_{CL}$ = 1 ms . L'inégalité (3) est tout juste respectée; il n'y a pas de marge de manoeuvre en augmentant $\tau_3$ car il faudrait alors calculer Vrms sur un temps plus court.

Dans ces conditions typiques de l'afficheur BiNem, il y aura donc du scintillement lors de l'adressage de l'image.

## DESCRIPTION DE L'INVENTION

Les inventeurs proposent un nouveau procédé pour supprimer l'effet de scintillement. Il s'agit de modifier le signal colonne de façon à diminuer la valeur de Vrms par rapport au cas classique, tout en continuant à synchroniser sa chute avec celle de l'impulsion ligne.

Le procédé d'adressage d'un écran matriciel cristal liquide nématique bistable à cassure d'ancrage, conforme à la présente invention est caractérisé par le fait qu'il comprend au moins l'étape consistant à appliquer, sur les électrodes de colonne de l'écran, un signal électrique dont les paramètres sont adaptés pour diminuer la tension quadratique moyenne des impulsions pixel parasites à une valeur inférieure à la tension de Fréederickzs, afin de réduire les effets optiques parasites de l'adressage.

Deux variantes sont proposées pour parvenir à ce résultat. La première variante consiste à diminuer le temps $\tau_C$ pendant lequel le signal colonne est appliqué, ce temps devenant inférieur au temps $\tau_2$ de durée du deuxième plateau du signal ligne.

La deuxième variante proposée consiste à changer la forme du signal colonne de façon à diminuer sa tension efficace. Ces deux variantes seront précisées dans la suite de sa description laquelle n'est bien entendu aucunement limitative.

La présente invention propose également un dispositif d'adressage d'un écran matriciel.

## LEGENDE DES FIGURES

La figure 1 illustre schématiquement l'état de la technique et plus précisément un pixel de la cellule cristal liquide et, dans ce pixel, les deux textures stables sans champ appliqué des molécules : (appelée texture uniforme U et texture tordue T. Le schéma H montre la texture des molécules sous champ. Les flèches indiquent les rotations des molécules au moment de l'arrêt du champ.

La figure 2 donne les signaux pixel classiques permettant la commutation entre les deux textures. Le temps de descente du signal d'inscription est inférieur au dixième de sa durée ou à 50 micro seconde dans le cas d'impulsions longues. Deux signaux d'effacement sont proposés : l'un est une impulsion suivie d'une rampe dont le temps de descente est supérieur à trois fois la durée de l'impulsion, l'autre est une descente en escalier, signal à deux plateaux.

La figure 3 montre le principe d'un écran matriciel multiplexé classique. La zone active d'un pixel se situe à l'intersection des électrodes ligne et colonne. Lorsque la ligne N est adressée, les signaux colonnes sont appliqués simultanément à toutes les colonnes, puis on passe à la ligne suivante.

La figure 4 donne un exemple de courbe électrooptique d'un pixel de cristal liquide fonctionnant selon le principe classique de la figure 1. Le premier plateau de la tension appliquée est égal à 16 V, et la transmission optique est fonction de la valeur du deuxième plateau. On note deux points de fonctionnement compatible d'un adressage multiplexé.

La figure 5 explicite la correspondance entre la valeur du deuxième plateau et la texture obtenue dans un dispositif classique. Dans l'exemple de la figure 4, la texture uniforme U s'obtient pour une valeur du deuxième plateau comprise entre 5 et 9V. Pour une valeur du deuxième plateau entre 0 et 5 V ou 9 et 16 V, on obtient la texture tordue T.

La figure 6 illustre les signaux lignes et colonnes d'un adressage multiplexé classique : obtention de l'une ou l'autre des deux textures en fonction du signe du signal colonne.

La figure 7 montre une amélioration classique proposée pour éviter une polarisation de la cellule cristal liquide qui pourrait entraîner la dégradation lente du matériau par électrolyse. Les signaux lignes et colonnes sont symétrisés, leur valeur moyenne est ainsi nulle.

La figure 8 présente une autre version classique où la symétrie est obtenue par inversion de la polarité d'une image à l'autre.

La figure 9 présente les signaux permettant d'appliquer, sur les pixels, des signaux symétriques en minimisant l'excursion de tension des circuits de commande. Dans ce cas les lignes non sélectionnées reçoivent un signal ligne égal à la moyenne des signaux colonne au lieu de ne pas recevoir de signal comme dans les cas indiqués précédemment.

La figure 10 montre l'existence de signaux parasites aux bornes du pixel connu provenant des signaux colonnes vu par le pixel lorsque sa ligne n'est pas activée.

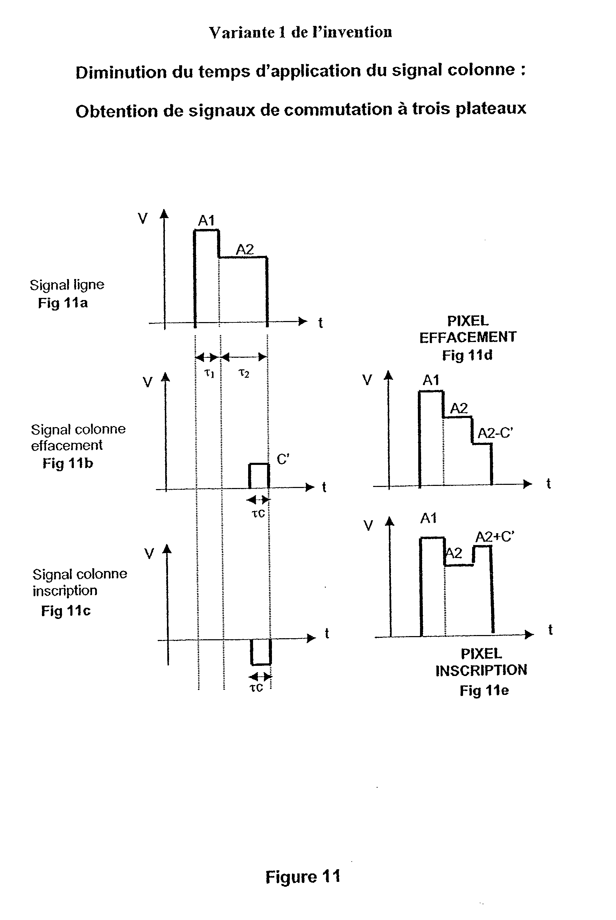

La figure 11 montre une variante de la nouvelle forme de signaux, conforme à la présente invention, proposée par les inventeurs. L'impulsion colonne dure un temps inférieur à la durée du deuxième i plateau du signal ligne et a une forme de créneau dont la chute est synchronisée avec la chute du deuxième plateau du signal ligne.

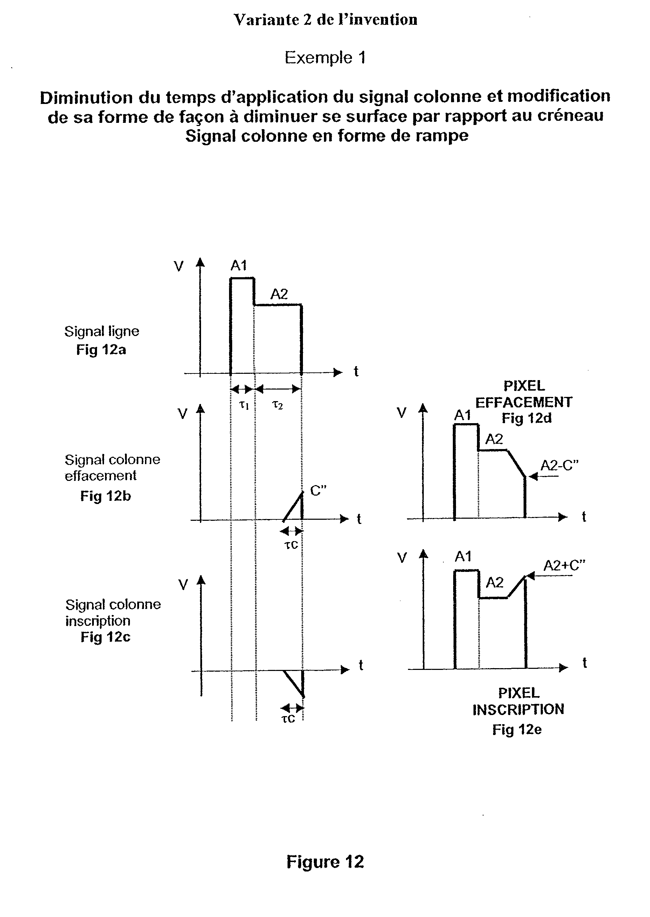

La figure 12 montre une autre variante de la nouvelle forme de signaux, conforme à la présente invention, proposée par les inventeurs. L'impulsion colonne dure un temps inférieur à la durée du deuxième plateau du signal ligne et a une forme de rampe dont la chute est synchronisée avec la chute du deuxième plateau du signal ligne.

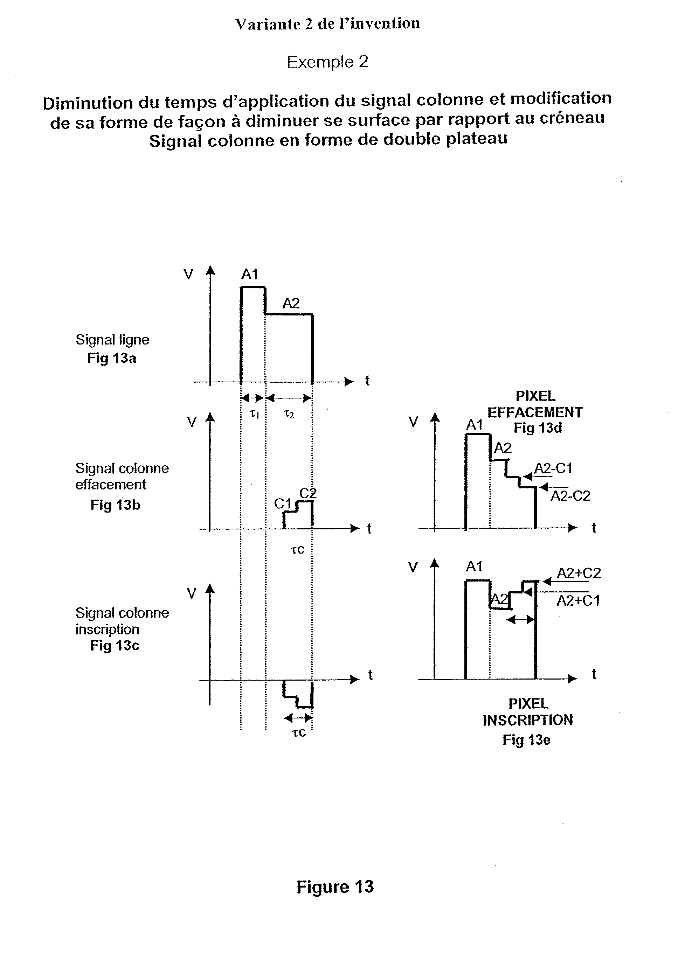

La figure 13 montre encore une autre variante de la nouvelle forme de signaux, conforme à la présente invention, proposée par les inventeurs. L'impulsion colonne dure un temps inférieur à la durée du deuxième plateau du signal ligne et a une forme en double plateau dont la chute est synchronisée avec la chute du deuxième plateau du signal ligne.

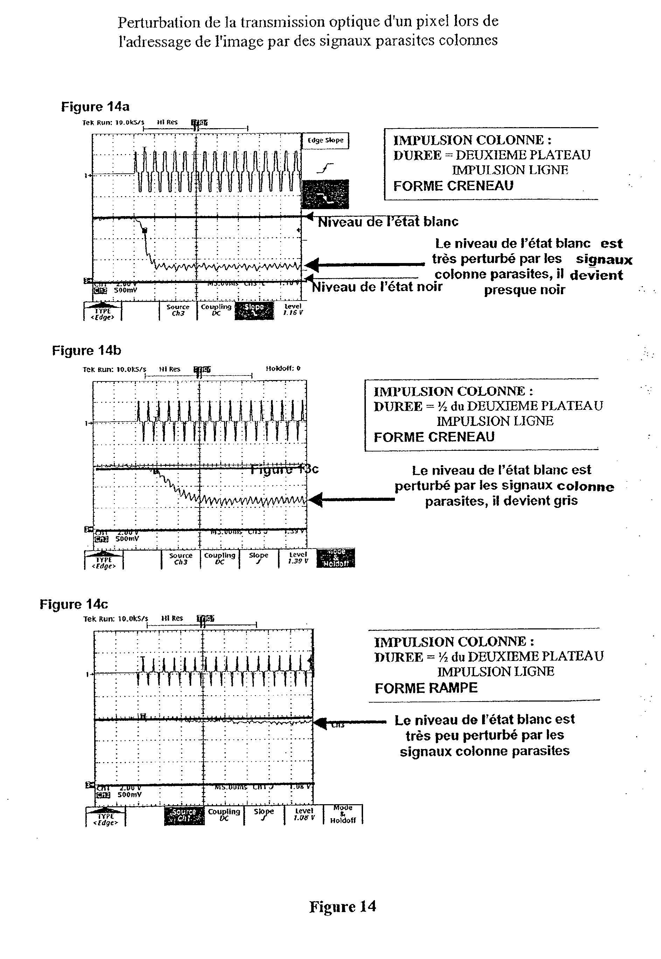

La figure 14 décrit à titre d'exemple le signal optique d'un pixel dans l'état blanc lorsque les lignes autres que sa ligne sont adressées. Ce pixel est sensible aux signaux colonnes parasites. Sa transmission optique est fonction de la forme d'impulsion colonne appliquée. 3 cas sont représentés : un cas classique (figure 14a), un signal colonne créneau plus court que le deuxième plateau du signal ligne (figure 14b conforme à la présente invention), un signal colonne plus court que le deuxième plateau du signal ligne et en forme de rampe (figure 14c conforme à la présente invention). Entre le premier et le troisième cas on constate une amélioration de la transmission optique du pixel conformément à la description de l'invention.

La présente invention s'applique en particulier aux dispositifs dénommés Binem décrits dans le document [1], utilisant deux textures, l'une uniforme ou faiblement tordue dans laquelle les molécules sont au moins sensiblement parallèles entre elles, et l'autre qui diffère de la première par une torsion de l'ordre de +/- 180°.

**Description de la variante 1 conforme à l'invention**

Le nouveau signal colonne C' est appliqué pendant un temps $\tau_c < \tau_2$, en gardant sensiblement l'amplitude C' de l'ordre de C, car une augmentation de C' augmenterait la valeur rms de la tension parasite appliquée aux pixels, et une diminution de C' ne permettrait plus la commutation du fait de la limitation indiquée par la courbe électrooptique de la figure 4. Les signaux correspondant à la variante 1 sont donnés sur la figure 11.

Sur celle-ci on retrouve en figure 11a : un signal ligne, figure 11b : un signal colonne effacement, figure 11c : un signal colonne inscription, figure 11d : un signal pixel effacement et en figure 11e : un signal pixel inscription.

Le bénéfice retiré de la diminution du temps du signal colonne est double :

(1) Cette variante minimise le signal parasite car les pixels des lignes non sélectionnées ne reçoivent la tension C' que pendant le temps $\tau_c$ qui est proche par exemple de $\tau_2/2$. Les inventeurs ont aussi expérimenté la symétrisation de ces signaux par les méthodes indiquées dans les figures 7, 8, et 9.

La tension Vrms des signaux parasites devient dans ce cas :

$$Vrms^2 = \tau_c C'^2/(\tau_1+\tau_2)$$

Dans l'exemple numérique précédent et avec par exemple $\tau_c=\tau_2/2$ et C' = C = 2 V on a

$$Vrms^2 = \tau_2 C'^2/2(\tau_1+\tau_2) = C'^2/4 = 1\ V^2 \text{ donc } Vrms= 1V > 0.65\ V$$

On a diminué la valeur rms par rapport au cas classique mais sans toutefois passer en dessous de la tension de Fréederickzs. L'effet de scintillement sera diminué mais pas supprimé.

(2) En raccourcissant l'impulsion colonne tout en synchronisant sa chute avec celle de l'impulsion ligne, la « descente lente » est réalisée en trois plateaux. Avec cette méthode, dans le cas de l'effacement, l'écoulement hydrodynamique du cristal liquide est réduit par rapport à celui obtenu avec une impulsion à deux plateaux. En effet, la chute de tension instantanée maximale entre chacun des trois plateaux est plus faible qu'entre deux plateaux, à tension ligne identique. On favorise donc encore plus le basculement vers la texture uniforme U. Pour l'inscription, l'écoulement hydrodynamique n'est pas modifiée par rapport au cas à deux plateaux, car la chute de tension instantanée maximale est identique. Les inventeurs ont montré que cette méthode permet, sans compliquer l'électronique de commande, d'obtenir la commutation entre les deux états même quand la viscosité du matériau cristal liquide augmente à basse température.

Le signal ligne illustré sur la figure 11a comprend une première séquence de durée $\tau_1$ et d'amplitude A1 suivie d'une seconde séquence de durée $\tau_2$ (supérieure à $\tau_1$) et d'amplitude A2 (inférieure à A1). Les fronts de montée et de descente de ces deux séquences sont pratiquement verticaux.

Le signal colonne d'effacement illustré sur la figure 11b comprend une impulsion de durée $\tau_c$ et d'amplitude C' de même polarité que le signal ligne illustré sur la figure 11a. Les fronts de montée et de descente de ce signal sont pratiquement verticaux. La durée $\tau_c$ est de l'ordre de la moitié de la durée $\tau_2$. Le front descendant du signal colonne d'effacement est synchronisé sur le front descendant du signal ligne.

Le signal colonne d'inscription illustré sur la figure 11c se distingue du signal colonne d'effacement illustré sur la figure 11b par une inversion de polarité. On retrouve ainsi sur la figure 11c une impulsion de durée $\tau_c$ et d'amplitude C', à fronts de montée et de descente verticaux, le front de descente étant synchronisé sur le front de descente du signal ligne.

La tension présente aux bornes du pixel dans le cadre d'un effacement, illustré sur la figure 11d, comprend une suite de trois créneaux à fronts de montée et descente verticaux. Le premier palier d'amplitude A1 dure $\tau_1$. Le second palier d'amplitude A2 dure $\tau_2$ - $\tau_c$. Le troisième palier d'amplitude A2 - C' dure $\tau_c$.

La tension présente aux bornes du pixel dans le cas d'une inscription comme illustré sur la figure 11e, comprend également trois paliers successifs à fronts de montée et descente verticaux : un premier palier de durée $\tau_1$ et d'amplitude A1, un deuxième palier d'amplitude A2 et de durée $\tau_2$ - $\tau_c$ et un troisième palier d'amplitude A2 + C' de durée $\tau_c$.

On notera cependant que dans le cas d'effacement du pixel, le palier intermédiaire a une amplitude A2 comprise entre l'amplitude initiale A1 la plus forte et l'amplitude finale A2 - C' la plus faible, tandis que dans le cas d'inscription du pixel, l'amplitude intermédiaire A2 est inférieure à l'amplitude initiale la plus forte A1 et à l'amplitude finale A2+ C'.

**Description de la variante 2 conforme à l'invention.**

La forme du signal colonne est modifiée de façon à diminuer sa tension efficace par rapport à celle d'un signal colonne standard constitué d'impulsions rectangulaires. La durée du signal colonne peut également être réduite par rapport au $\tau_2$ classique, de façon à bénéficier des avantages de la variante 1.

Exemple 1

Nous prendrons à titre de premier exemple un signal colonne de type rampe. L'amplitude de ce signal colonne croit linéairement avec le temps jusqu'à atteindre une tension crête maximale C", puis est brutalement ramenée à zéro en synchronisme avec la fin de l'impulsion ligne.

La valeur maximum du signal colonne C" peut être augmentée par rapport à la valeur de C classique, ce qui permet de faciliter la commutation entre les 2 textures (cf courbe électrooptique de la figure 4).

Un exemple de signaux correspondant à l'exemple 1 de la variante 2 est donné sur la figure 12. Là encore on retrouve sur la figure 12a : un signal ligne, figure 12b : un signal colonne effacement, figure 12c : un signal colonne inscription, figure 12d : un signal pixel effacement et en figure 12e : un signal pixel inscription. L'impulsion colonne est de durée $\tau_c$ et a la forme d'une rampe de maximum C".

La tension Vrms des signaux parasites devient dans ce cas :

$$Vrms2 = \tau_c \ C''2/3(\tau_1 + \tau_2)$$

Dans l'exemple numérique précédent et avec par exemple $\tau_c = \tau_2/2$ et C"= C = 2 V on a :

$$Vrms2 = \tau_2 \ C''2/6(\tau_1 + \tau_2) = C''2 \ / \ 12 = 0,33 \ V$$

Soit Vrms = 0,57 V < 0,65 V

On a diminué la valeur rms par rapport au cas classique et à la variante 1. Le critère (1) est à présent vérifié, il n'y a plus d'effet de scintillement lors de l'adressage de l'image.

Le signal ligne illustré sur la figure 12a comprend une première séquence de durée $\tau_1$ et d'amplitude A1 suivie d'une seconde séquence de durée $\tau_2$ (supérieure à $\tau_1$) et d'amplitude A2 (inférieure à A1). Les fronts de montée et de descente de ces deux séquences sont pratiquement verticaux.

Le signal de colonne d'effacement illustré sur la figure12b comprend une impulsion de durée $\tau_c$ comprenant un front de montée en rampe linéaire pour atteindre l'amplitude C' et un front descendant vertical.

Le signal de colonne d'inscription illustré sur la figure 12c se distingue du signal de colonne d'effacement illustré sur la figure 12b par une inversion de polarité. On aperçoit ainsi sur la figure 12c une impulsion de durée $\tau_c$ ayant un front de montée linéaire pour atteindre l'amplitude C' et un front descendant vertical.

La tension présente aux bornes du pixel dans le cas d'un effacement, tel qu'illustré sur la figure 12d comprend trois séquences successives : une première séquence d'amplitude A1 et de durée $\tau_1$, une deuxième séquence d'amplitude A2 et de durée $\tau_2$ - $\tau_c$ et une troisième séquence d'amplitude progressivement décroissante de durée $\tau_c$ passant d'une amplitude initiale A2 à une amplitude finale A2-C'.

Là encore, la valeur A2 pour la figure 12d est une valeur intermédiaire.

La tension présente aux bornes du pixel dans le cas d'une inscription comprend également trois séquences successives : une première séquence A1 d'amplitude A1 et de durée $\tau_1$, une deuxième séquence d'amplitude A2 et

de durée $\tau_2 - \tau_c$ et une troisième séquence d'amplitude progressivement croissante, de durée $\tau_c$, passant de la valeur initiale A2 à la valeur supérieure A2+C'. Ainsi dans le cas de la figure 12e, de manière comparable à la figure 11e, la valeur A2 est une valeur intermédiaire.

Exemple 2

Nous prendrons à titre de deuxième exemple un signal colonne croissant à deux plateaux C1 et C2 de durée respectives $\tau_{c1}$ et $\tau_{c2}$. Un exemple de signaux correspondant à l'exemple 2 de la variante 2 est donné sur la figure 13. Là encore on retrouve sur la figure 13a : un signal ligne, figure 13b : un signal colonne effacement, figure 13c : un signal colonne inscription, figure 13d : un signal pixel effacement et en figure 13e : un signal pixel inscription. L'impulsion colonne est de durée $\tau_c = \tau_{c1} + \tau_{c2}$ et a la forme d'un double plateau.

**Résultats expérimentaux avec les 2 variantes**

Afin de démontrer la pertinence de l'invention, la transmission optique d'un pixel d'un écran BiNem lors de l'adressage d'une image a été mesurée. Du fait de l'arrangement des polariseurs, la texture uniforme donne dans ce cas l'état optique blanc, et la texture inscrite l'état noir. Le pixel est, lors de l'adressage de sa ligne, basculé dans la texture uniforme (l'état blanc), puis il subit pendant le reste de la durée d'adressage de l'image les signaux colonnes parasites. La transmission optique va alors chuter à une valeur intermédiaire entre les états blanc et noir. La réponse optique est mesurée pour les 3 cas suivants :

- classique :
    signal colonne créneau - amplitude C - durée $\tau_c = \tau_2$
- selon variante 1 :
    signal colonne créneau - amplitude C - durée $\tau_c = \tau_2/2$
- selon variante 2 - exemple 1 :
    signal colonne rampe - amplitude max C - durée $\tau_c = \tau_2/2$

Les caractéristiques de l'écran BiNem et des signaux d'adressage sont très proches des valeurs données dans l'exemple numérique.
On constate sur la figure 14 que le niveau de la transmission optique est très perturbé (proche du noir) dans le cas classique (figure 14a). Ce cas correspond à un scintillement marqué de l'écran durant son adressage électrique. Dans la variante 1 conforme à l'invention (figure 14b), l'état optique est moins perturbé, mais reste grisé. Le scintillement est toujours visible. Dans la variante 2 conforme à l'invention (figure 14c), on mesure un état optique très proche du blanc. L'état optique du pixel mesuré n'est presque plus perturbé par les signaux parasites colonne.

**CONCLUSION**

En conclusion les inventeurs présentent une méthode permettant de commander la commutation des deux états des pixels d'un écran passif matriciel cristal liquide bistable commutant par cassure de surface. Les signaux originaux proposés utilisent un signal ligne à deux paliers et un signal colonne retardé par rapport au début et finissant exactement à la fin du deuxième palier du signal ligne et de forme variée, créneau classique ou par exemple rampe. Cette méthode permet d'appliquer sur les pixels de l'écran simultanément, au choix, soit les signaux à temps de descente rapide permettant d'obtenir l'état tordu soit une « descente lente » en trois paliers donnant l'état uniforme. L'invention d'une part diminue et même dans certains cas supprime les effets parasites au moment des changements d'image et d'autre part facilite la commutation en rapprochant la forme du signal d'effacement d'une courbe lentement décroissante.

**REFERENCES**

Document 1 : brevet FR 2740894
Document 2 : "Write and erase mechanism of surface controlled bistable nematic pixel" M. Giocondo, I. Lelidis, I. Dozov, G. Durand , Eur.Phys.J.AP 5, 227-230 (1999)
Document 3 : Alt PM, Pleshko P, 1974, IEEE Trans Electron Devices ED-21 : 146-55
Document 4 : " recent improvements of bistable Nematic Displays switched by anchoring breaking Proceeding of SID 2001, 224-227.

**Revendications**

1. Procédé d'adressage d'un écran matriciel cristal liquide nématique bistable à cassure d'ancrage, **caractérisé par le fait qu'**il comprend au moins l'étape consistant à appliquer, sur les électrodes de colonne de l'écran, un signal électrique dont les paramètres sont adaptés pour diminuer la tension quadratique moyenne des impulsions pixel parasites à une valeur inférieure à la tension de Fréederickzs, afin de réduire les effets optiques parasites de l'adressage.

2. Procédé d'adressage d'un écran matriciel cristal liquide nématique bistable à cassure d'ancrage selon la revendication 1, l'écran utilisant deux textures, l'une uniforme ou faiblement tordue dans laquelle les molécules sont au moins sensiblement parallèles entre elles, et l'autre qui diffère de la première par une torsion de l'ordre de +/-180°, **caractérisé par le fait qu'**il comprend au moins l'étape consistant à appliquer, sur les électrodes de colonne de l'écran, un signal électrique dont les paramètres sont adaptés pour diminuer la tension quadratique moyenne des impulsions pixel parasites à une valeur inférieure à la tension de Fréederickzs, afin de réduire les effets optiques parasites de l'adressage.

3. Procédé selon l'une des revendications 1 ou 2, **caractérisé par le fait que** les paramètres adaptés du signal électrique sont choisis dans le groupe comprenant : la forme et/ou la durée et/ou l'amplitude du signal colonne.

4. Procédé selon l'une des revendications 1 à 3, **caractérisé par le fait que** la fin du signal colonne est synchronisé avec la fin de l'impulsion ligne.

5. Procédé selon l'une des revendications 1 à 4, **caractérisé par le fait que** la durée du signal colonne est inférieure à la durée du dernier palier de l'impulsion ligne.

6. Procédé selon l'une des revendications 1 à 5, **caractérisé par le fait que** la durée du signal colonne est de l'ordre de la moitié de la durée du dernier palier de l'impulsion ligne.

7. Procédé selon l'une des revendications 1 à 6, **caractérisé par le fait que** le signal colonne a la forme d'un créneau.

8. Procédé selon l'une des revendications 1 à 6, **caractérisé par le fait que** le signal colonne a la forme d'une rampe.

9. Procédé selon la revendication 8, **caractérisé par le fait que** le signal colonne a la forme d'une rampe qui croit linéairement jusqu'à atteindre une tension maximale, puis est brutalement ramenée à zéro en synchronisme avec la fin de l'impulsion ligne.

10. Procédé selon l'une des revendications 1 à 9, **caractérisé par le fait que** les signaux électriques appliqués sont adaptés pour définir une valeur moyenne nulle.

11. Procédé selon la revendication 10, **caractérisé par le fait que** chaque signal de ligne et chaque signal de colonne comprend deux sous-ensembles successives de configuration identique, mais de polarités opposées.

12. Procédé selon la revendication 10, **caractérisé par le fait que** la polarité des signaux de ligne et des signaux de colonne est inversée à chaque changement d'image.

13. Procédé selon la revendication 10, **caractérisé par le fait qu'**une tension commune est ajoutée aux composantes utiles des signaux ligne et des signaux colonne de sorte que les signaux appliqués à chaque pixel présentent deux sous-ensembles successifs de polarités opposées.

14. Dispositif d'adressage d'un écran matriciel cristal liquide nématique bistable à cassure d'ancrage, **caractérisé par le fait qu'**il comprend des moyens conçus pour appliquer, sur les électrodes de colonne de l'écran, un signal électrique dont les paramètres sont adaptés pour diminuer la tension quadratique moyenne des impulsions pixels parasites à une valeur inférieure à la tension de Fréederickzs, afin de réduire les effets optiques parasites de l'adressage.

15. Dispositif d'adressage d'un écran matriciel cristal liquide nématique bistable à cassure d'ancrage selon la revendication 14, l'écran utilisant deux textures, l'une uniforme ou faiblement tordue dans laquelle les molécules sont au moins sensiblement parallèles entre elles, et l'autre qui diffère de la première par une torsion de l'ordre de +/-180°, **caractérisé par le fait qu'**il comprend des moyens conçus pour appliquer, sur les électrodes de colonne de l'écran, un signal électrique dont les paramètres sont adaptés pour diminuer la tension quadratique moyenne des impulsions pixel parasites à une valeur inférieure à la tension de Fréederickzs, afin de réduire les effets optiques parasites de l'adressage.

16. Dispositif selon l'une des revendications 14 à 15, **caractérisé par le fait que** les paramètres adaptés du signal électrique sont choisis dans le groupe comprenant : la forme et/ou la durée et/ou l'amplitude du signal colonne.

17. Dispositif selon l'une des revendications 14 à 16, **caractérisé par le fait que** la fin du signal colonne est synchronisé avec la fin de l'impulsion ligne.

18. Dispositif selon l'une des revendications 14 à 17, **caractérisé par le fait que** la durée du signal colonne est inférieure à la durée du dernier palier de l'impulsion ligne.

19. Dispositif selon l'une des revendications 14 à 18, **caractérisé par le fait que** la durée du signal colonne est de l'ordre de la moitié de la durée du dernier palier de l'impulsion ligne.

20. Dispositif selon l'une des revendications 14 à 19, **caractérisé par le fait que** le signal colonne a la forme d'un créneau.

21. Dispositif selon l'une des revendications 14 à 20, **caractérisé par le fait que** le signal colonne a la forme d'une rampe.

22. Dispositif selon la revendication 21, **caractérisé par le fait que** le signal colonne a la forme d'une rampe qui croit linéairement jusqu'à atteindre une tension maximale, puis est brutalement ramenée à zéro en synchronisme avec la fin de l'impulsion ligne.

23. Dispositif selon l'une des revendications 14 à 22, **caractérisé par le fait que** les signaux électriques appliqués sont adaptés pour définir une valeur moyenne nulle du signal pixel.

24. Dispositif selon la revendication 23, **caractérisé par le fait que** chaque signal de ligne et chaque signal de colonne comprend deux sous-ensembles successifs de configuration identique, mais de polarités opposées.

25. Dispositif selon la revendication 23, **caractérisé par le fait que** la polarité des signaux de ligne et des signaux de colonne est inversée à chaque changement d'image.

26. Dispositif selon la revendication 23, **caractérisé par le fait qu'**une tension commune est ajoutée aux composantes utiles des signaux ligne et des signaux colonne de sorte que les signaux appliqués à chaque pixel présentent deux sous-ensembles successifs de polarités opposées.

## Principe d'un écran BiNem

Texture U                           Texture T

Substrat 1 (Lame maître)

Électrode

**Couche d'ancrage**

couplage
élastique

couplage
hydrodynamique

$\vec{E}$

**Couche d'ancrage**

Électrode

Substrat 2 (Lame esclave)

**Figure 1**

## Signaux de commutation d'un pixel

**Signaux d'inscription** : passage à la texture tordue T

P1 > Vc
P2 > Vc
P2 > $\Delta$V

P1 > Vc
P1 - P2 > $\Delta$V
P2 < Vc

Figure 2a1

Figure 2a2

**Signaux d'effacement** : passage à la texture uniforme U

P1 > Vc
P2 > Vc
P2 < $\Delta$V

Descente lente par rampe.

Descente lente en escalier.
Deux plateaux

Figure 2b1

Figure 2b2

Figure 2

**Ecran matriciel multiplexé**

Colonne M

électrodes colonnes
placées sur la lame
supérieure.

Ligne N

Ligne N+1

électrodes lignes
placées sur la lame
inférieure

**Figure 3**

# Comportement électrooptique d'un pixel de BiNem

# adressé par une impulsion à double plateau

Figure 4

**Inscription ou effacement en fonction de la valeur du deuxième plateau**

**aux bornes du pixel correspondant à la courbe électrooptique de la**

**figure 4**

**Figure 5**

**Signaux appliqués sur les électrodes**

Signal ligne
**Fig 6a**

Signal colonne
effacement
**Fig 6b**

Signal colonne
inscription
**Fig 6c**

PIXEL
EFFACEMENT
**Fig 6d**

$P1 = A1$

$P2E = A2-C$

PIXEL
INSCRIPTION
**Fig 6e**

$P1 = A1$

$P2I = A2+C$

**Figure 6**

Signaux symétriques de valeur moyenne nulle

Signal ligne
**Fig 7a**

Signal colonne
effacement

**Fig 7b**

Signal colonne
inscription
**Fig 7c**

Signal pixel
effacement

**Fig 7d**

Signal pixel
inscription

**Fig 7e**

**Figure 7**

**Signaux symétrisés par changement de polarité à chaque image**

**Figure 8**

**Signaux symétriques de polarité constante et d'excursion réduite.**

sélectionnée

Ligne N

non
sélectionnée

V

**Fig 9a**

P1

Ligne N+1
**Fig 9b**

Colonne M
**Fig 9c**

Pixel M,N
effacement
**Fig 9d**

P1

P2E

Pixel M,N+1
inscription
**Fig 9e**

P1

P2I

t

Les 5 niveaux du signal ligne sont : 0 ; (P2I-P2E)/2 ; (P2I+P2E)/2 ; P2I; P1.

Les 5 niveaux du signal colonne sont : 0 ; (P2I-P2E) ; P2E ; P2I; P1.

Les tensions des pixels sont : 0 ; ±(P2I-P2E)/2 ; ±P2E ; ±P2I ; ±P1.

La moyenne du carré du signal parasite est : $\tau_2(\text{P2I-P2E})^2/4(\tau_1+\tau_2)$.

**Figure 9**

## Schéma de l'écran matriciel (rappel)

Colonne M

Ligne N →
Ligne N+1 →

## Existence de signaux parasites aux bornes d'un pixel

$\tau_1$ $\tau_2$ $\tau_3$ $\tau_1$ $\tau_2$

V

Ligne N
**Fig 10a**

A1
A2

Ligne N+1
**Fig 10b**

Colonne M
**Fig 10c**

C

Pixel M,N
effacement
**Fig 10d**

P1 = A1
P2E = A2-C

**Signal parasite**

Pixel M,N+1
inscription
**Fig 10e**

P1 = A1
P2I = A2+C

t

**Signal parasite**

**Figure 10**

Variante 1 de l'invention

# Diminution du temps d'application du signal colonne :

## Obtention de signaux de commutation à trois plateaux

Signal ligne
**Fig 11a**

Signal colonne
effacement
**Fig 11b**

Signal colonne
inscription
**Fig 11c**

PIXEL
EFFACEMENT
**Fig 11d**

PIXEL
INSCRIPTION
**Fig 11e**

**Figure 11**

## Variante 2 de l'invention

### Exemple 1

## Diminution du temps d'application du signal colonne et modification de sa forme de façon à diminuer se surface par rapport au créneau
## Signal colonne en forme de rampe

Signal ligne
**Fig 12a**

Signal colonne
effacement
**Fig 12b**

Signal colonne
inscription
**Fig 12c**

**PIXEL
EFFACEMENT
Fig 12d**

**PIXEL
INSCRIPTION
Fig 12e**

**Figure 12**

**Variante 2 de l'invention**

Exemple 2

**Diminution du temps d'application du signal colonne et modification de sa forme de façon à diminuer se surface par rapport au créneau Signal colonne en forme de double plateau**

**Figure 13**

Perturbation de la transmission optique d'un pixel lors de
l'adressage de l'image par des signaux parasites colonnes

**Figure 14a**

IMPULSION COLONNE :
DUREE = DEUXIEME PLATEAU
IMPULSION LIGNE
FORME CRENEAU

Niveau de l'état blanc

Le niveau de l'état blanc **est**
**très perturbé par les** **signaux**
**colonne parasites, il** **devient**
Niveau de l'état noir **presque noir**

**Figure 14b**

IMPULSION COLONNE :
DUREE = ½ du DEUXIEME PLATEAU
IMPULSION LIGNE
FORME CRENEAU

Le niveau de l'état blanc est
perturbé par les signaux **colonne**
parasites, il devient gris

**Figure 14c**

IMPULSION COLONNE :
DUREE = ½ du DEUXIEME PLATEAU
IMPULSION LIGNE
FORME RAMPE

Le niveau de l'état blanc est
très peu perturbé par les
signaux colonne parasites

**Figure 14**

**Office européen des brevets**

# RAPPORT DE RECHERCHE EUROPEENNE

Numéro de la demande

EP 03 29 0272

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,D | FR 2 740 894 A (CENTRE NAT RECH SCIENT) 9 mai 1997 (1997-05-09) <br><br> * page 11, ligne 33 - page 13, ligne 4; revendication 41 * <br> --- | 1-4, 10-17, 23-26 | G09G3/36 <br> G02F1/139 |
| A | DOZOV I ET AL: "Nemoptic's bistable nematic liquid-crystal technology" , INFORMATION DISPLAY, JAN. 2002, PALISADES INST. RES. SERVICES, USA, VOL. 18, NR. 1, PAGE(S) 10 - 12 XP002216407 ISSN: 0362-0972 * figure 3 * <br> --- | 4,17 | |
| A | US 6 100 866 A (SURGUY PAUL WILLIAM HERBERT) 8 août 2000 (2000-08-08) * abrégé; figure 11 * * colonne 5, alinéa 2 * <br> ----- | 8,21 | |

| DOMAINES TECHNIQUES RECHERCHES (Int.Cl.7) |
|---|
| G09G <br> G02F |

Le présent rapport a été établi pour toutes les revendications

| Lieu de la recherche | Date d'achèvement de la recherche | Examinateur |
|---|---|---|
| LA HAYE | 25 mars 2003 | Amian, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 0272

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2003

| Document brevet cité au rapport de recherche | | Date de publication | Membre(s) de la famille de brevet(s) | | Date de publication |
|---|---|---|---|---|---|
| FR 2740894 | A | 09-05-1997 | FR | 2740893 A1 | 09-05-1997 |
| | | | FR | 2740894 A1 | 09-05-1997 |
| | | | CA | 2231369 A1 | 15-05-1997 |
| | | | CN | 1196127 A | 14-10-1998 |
| | | | EP | 0859970 A1 | 26-08-1998 |
| | | | WO | 9717632 A1 | 15-05-1997 |
| | | | JP | 2000504433 T | 11-04-2000 |
| | | | JP | 3293138 B2 | 17-06-2002 |
| | | | TW | 442695 B | 23-06-2001 |
| | | | US | 2001012080 A1 | 09-08-2001 |
| US 6100866 | A | 08-08-2000 | CA | 2222064 A1 | 28-11-1996 |
| | | | DE | 69620398 D1 | 08-05-2002 |
| | | | EP | 0829077 A1 | 18-03-1998 |
| | | | WO | 9637875 A1 | 28-11-1996 |
| | | | JP | 11505935 T | 25-05-1999 |

EPO FORM P0460

Pour tout renseignement concernant cette annexe : voir Journal Officiel de l'Office européen des brevets, No.12/82